(19) Europäisches Patentamt
European Patent Office
Office européen des brevets

(11) Publication number: **0 207 906 B1**

# EUROPEAN PATENT SPECIFICATION

(12)

(45) Date of publication of patent specification :
03.04.91 Bulletin 91/14

(51) Int. Cl.⁵ : **A01G 25/02**

(21) Application number : **86830190.4**

(22) Date of filing : **02.07.86**

(54) **A bleeding delivery device for the localized irrigation of culture spots.**

(30) Priority : 03.07.85 IT 4831185
09.01.86 IT 3551186 U

(43) Date of publication of application :
07.01.87 Bulletin 87/02

(45) Publication of the grant of the patent :
03.04.91 Bulletin 91/14

(84) Designated Contracting States :
AT BE CH FR GB LI LU NL SE

(56) References cited :
DE-A- 3 046 479
FR-A- 1 463 185
GB-A- 2 097 641

(73) Proprietor : AGRI.COM. s.n.c. di ZANON
GIANCARLA & C.
Regione Periane, 231
I-18018 Taggia IM (IT)

(72) Inventor : D'Ambrosio, Angiolo
Regione Periane, 231
I-18018 Taggia Im (IT)

(74) Representative : Tonon, Gilberto et al
c/o Società Italiana Brevetti S.p.A. Piazza di
Pietra, 39
I-00186 Roma (IT)

# Description

The present invention relates to a bleeding delivery device for localized irrigation to culture sposts having all the features of the preamble of claim 1.

Such a device is known from e.g. FR-A-1 463 185.

At present the market offers a great deal of localized irrigation systems, such as drop irrigators, spray irrigators, punctured sleeves, etc., which are scarcely effective, in particular for culture on sloping terrain or in pots, because they do not ensure a uniform distribution of water, or else, on the contrary, they are so sophisticated and consequently costly, that their adoption for low-gain cultivation is unadvisable. The devices associated to the above systems have moreover the inconvenience that they are easily clogged by various agents, both external and internal (insects, microorganisms, soil, roots, etc.).

Recently new bleeding irrigation systems have been proposed which provide for the distribution of water to cultures by means of the laying of special pipes made with porous material which, however, without discussing their effectiveness, show the inconvenience of delivering water along the whole path of the pipes themselves.

An aim of the present invention is to overcome the inconveniences of the above mentioned irrigation systems providing a bleeding delivery device, to be used either alone or together with similar ones interconnected with each other, for the localized irrigation of culture spots, with particular reference to those on sloping terrain or in pots.

Another aim of the present invention is to provide a bleeding delivery device of the above mentioned kind having an extremely simple and effective structure as well as low cost.

The present invention is characterised by the features of the second portion of claim 1.

The present invention will be better illustrated hereinafter from the disclosure of embodiments and applications thereof, with reference to the attached drawings, wherein :

figures 1a), b), c) show a plan view, a sectional view in a non operative condition and a sectional view in the operative condition, respectively, of a first embodiment of the device in question ;
figures 2a), b), c) show views similar to those of figure 1 of a second embodiment of the device in question ;
figures 3a), b), c) show views similar to those of figures 1 and 2 of a third embodiment of the device in question ;
figures 4a), b) show perspective and sectional views, respectively, of a fourth embodiment of the device in question ; and
figure 5 is a top plan view of an application of the device in question to several kinds of culture.

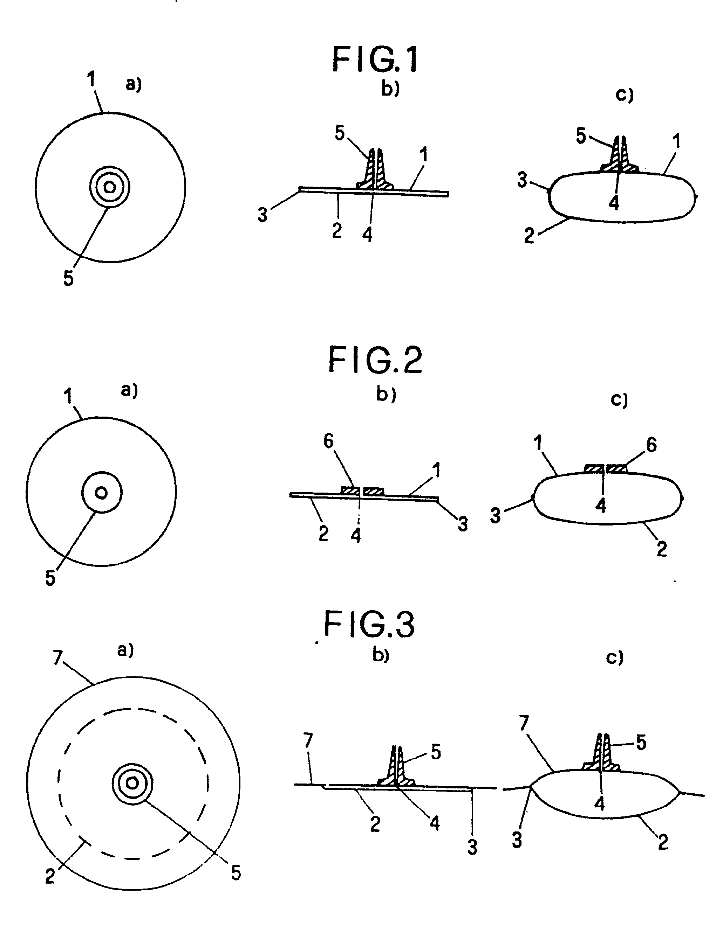

With reference to figure 1a) and b) the bleeding delivery device for the localized irrigation of culture spots according to the present invention comprises a first top plate 1 and a second lower plate 2, superposed, of a special fibrous material, with woven or non-woven structure, porous and flexible, known on the market.

Plates 1 and 2, respectively the top and the lower one, having a circular shape in the present exemplary embodiment, are peripherally sealed to one another by means of a circumferential bonding 3.

The upper plate 1 has a small hole 4 in a central position, in correspondence with which, and in communication therewith, the axial bore of a frusto-conical nipple 5 is arranged, preferably made of rigid plastic, the enlarged base of which is fastened to the external face of said upper plate 1, the nipple 5 being arranged to receive in its axial bore a micro-pipe for carrying water to the interior of the space formed by the plates 1 and 2 coupled together.

The delivery device thus formed, when filled with water in the above mentioned manner, appears as shown in figure 1c) ready to deliver by bleeding the water contained therein, through plates 1 and 2 thanks to the peculiar features of the material with which they are made.

The device shown in figures 2a), b), c), in which the same components disclosed with reference to figure 1 will be indicated with the same reference numbers without further disclosure, is substantially similar to the one in the foregoing embodiment with the sole difference that the frusto-conical nipple 4 abovementioned is substituted by a plate 6, preferably made of rigid plastic, having an axial bore, coincident with the axial bore 4 in the upper plate 1, to receive the micropipe which feeds water to the delivery device.

In figures 3a), b), and c) a third embodiment of the device in question is shown, where a film, made of impermeable and flexible material and shown in 7, preferably made of polyethylene, having a circular shape in the present example, substitutes the upper plate 1 of the foregoing embodiments and is concentrically coupled, by means of the bonding 3, to a plate 2, having a smaller diameter, similar to the one disclosed with reference to figure 1.

Also in the present embodiment a nipple 5 is considered, of the kind disclosed with reference to figure 2 and indicated with 6, the axial bore of which is in register with a similar bore machined at the center of film 7 for the supply of water by means of a micro-pipe. In the event of the embodiment of figure 3, the bleeding will occur only through the lower face of the delivery device, i.e. through the plate 2.

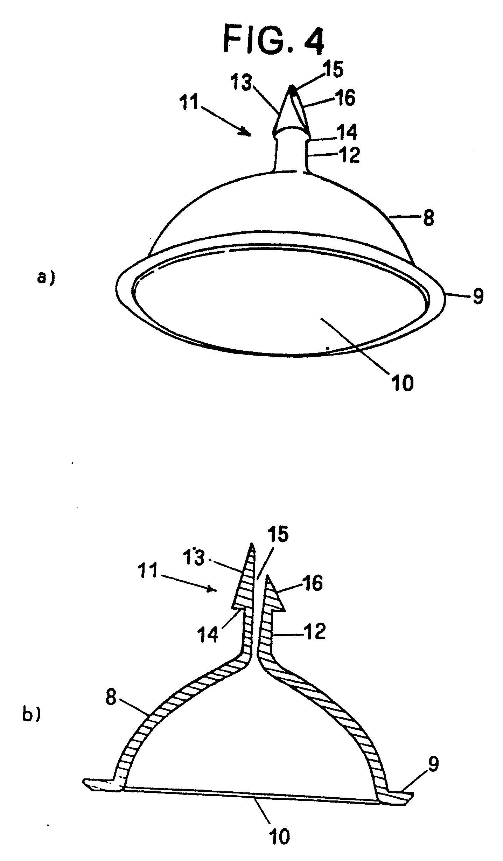

In figures 4a), b), a fourth embodiment of the device in question is shown, shaped so as to allow a use thereof either by means of a micro-pipe in the same manner as the previous embodiments or by means of direct coupling to specifically prepared irrigation systems or to conventional irrigation systems.

The bleeding delivery device of figure 4 comprises a cup-shaped top member 8, made of a rigid impermeable material, fastened to a circumferential flange 9 on the open bottom end to which is sealed, for instance by bonding, the perimeter of a flat plate 10 made of a porous material or of a material with microscopic holes in order to set up a collection chamber for irrigation water to be delivered by bleeding exclusively through the plate 10.

The cup-shaped member 8 is fastened at its top end to a nipple, generally shown in 11, constituted by a tubular member 12 the free end 13 of which has the shape of a cone having a base diameter greater than that of the tubular member 12 in such a manner as to create between the two a step 14 the purpose of which will be better explained hereinafter.

The nipple 11 is axially traversed by a through hole 12 having the shape of an inverted cone and has an inclined plane 16 cutting a part of the peripheral conical surface of the free end 13 in order to create a shape substantially similar to that of the point of an arrow.

The bleeding delivery device according to the invention is suited, for a double use in irrigation systems, i.e., a primary use in which the delivery device in question is connected to a suitable water supply network by means of a micro-pipe which is forcibly inserted in the bore 15 thanks to its conical shape, and a secondary use in which the delivery device is installed in the irrigation system by inserting it directly into the foreseen water delivery pipe by means of the nipple 11 having, as above mentioned, its free end shaped like the point of an arrow, in which event step 14 serves to avoid its decoupling.

In the operation, once the delivery device of the present invention is set up in one of the above described ways, the water of the water supply network arrives at the chamber constituted by the cup-shaped upper member 8 and by the plate 10, coming out of the latter by bleeding in order to obtain the desired spot irrigation.

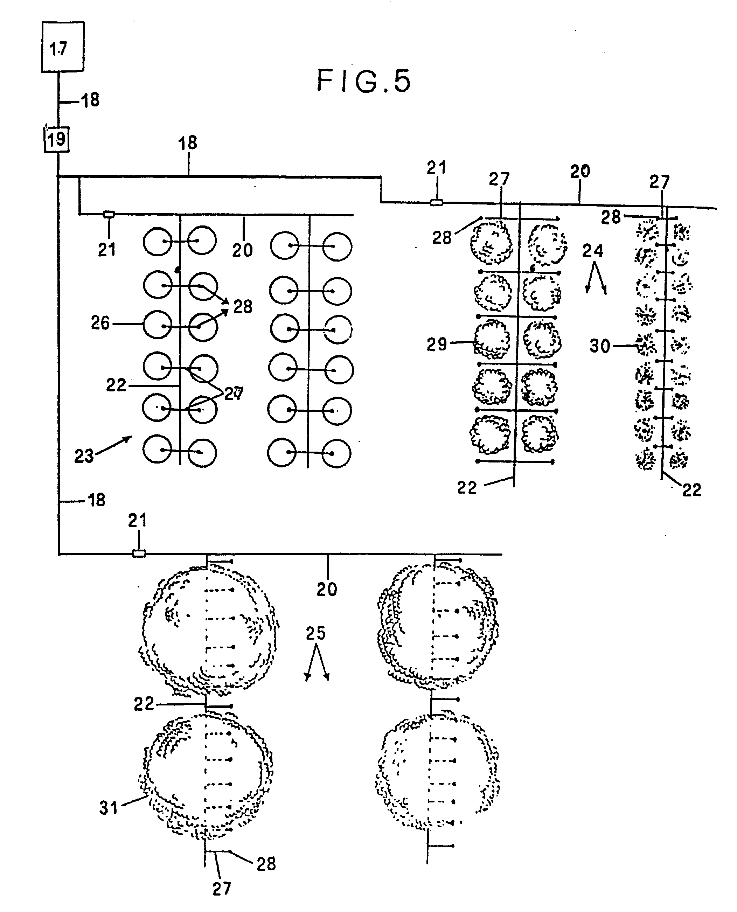

With reference now to figure 5, an example of an irrigation plant for several kinds of culture with the use of delivery devices according to the present invention is shown.

In the figure in question a water delivery tap 17, the main feed line 18 and a control head 19, comprising filters, valves, gate valves, etc. are indicated.

From the main line 18, manifolds 20 are derived, provided with suitable pressure regulators 21, to each of which respective branches 22 are connected for a plant for pot cultures, generally shown in 23, for a plant on grass-type cultures, generally shown in 24, and for a plant on tree and shrub cultures, generally shown in 25.

In particular, in the plant 23 for pot cultures, between two lines of pots 26 a branch 22 is laid, on which, by means of a suitable tool, two opposite and calibrated holes are made in register with the pots posed at both sides thereof. In each of these holes a micro-pipe 27 having a length such as to extend to the respective pot 26 is inserted. On the free end of each micro-pipe 27 a delivery device according to the present invention is mounted, generally shown in 28, by means of the insertion of the micro-pipe 27 itself into the axial bore of the nipple (5, 6 or 11, previously described) associated to the delivery device. In each of the pots 26 a respective delivery device 28 connected in this way is placed and if possible buried for a few centimeters.

At this moment, water is delivered to the plant under a pressure which may range from 0,02 ATM up to 1,0 ATM.

Under very low pressures, the delivery device will bleed water slowly and in this case the irrigation will be a continuous one and will be arranged in very long shifts (several days).

Under relatively high pressures, 0,5-1,0 ATM, the delivery device shows an noteable bleeding and practically drips. In this case the watering shifts will be faster (from several hours to one day) according to the size of the pot and the evaporation-transpiration process.

The irrigation plant above disclosed may be automatized, if the water tap is located at a height of 3 meters above the surface to be watered. It is important to remark that the automatization may be set up using only hydraulic mechanisms, so that no electric power is needed, nor control consoles, motors, electrovalves and all the sophisticated devices for the automatization of a conventional drop or spray plant.

The great economy of material, energy and maintenance which is reached with a plant utilizing delivery devices according to the present invention is therefore clear.

If the plant according to the present invention as above described is compared with a "drop-wise" plant, the following may be remarked :

– the drop plant delivers too much water in a short time so that a pot will not be able to hold it and this will be lost by percolation through the bottom. Consequently there will be a waste of water, energy and fertilizers. If, to avoid the percolation, the watering shifts are shortened, there will no longer be uniformity of water distribution with a consequent damage for the cultivation ;

– in order to automatize a drop plant with the aim of rendering its performance comparable with the one according to the invention, its minimum cost will be doubled and also the management costs are extremely high ;

– the amount of delivered water with a drop plant, even fractioned, will never be the optimum one because changes of humidity will always be recorded in different points of the plant.

With the plant according to the present invention, on the contrary, the amount of water may be adjusted at will and water will be delivered in a uniform way. With the continuous irrigation the humidity will be constant without excesses or deficencies, respecting, consequently, the physiological needs of the culture.

If a spray plant is compared with the one according to the invention, the differences are those already disclosed for the drop-wise plant, with the remark that the spray plant enhances even more the above mentioned inconveniences of the drop plant (greater disuniformity of delivery, greater water waste, greater fertilizer waste), and in addition they favour the development of noxious fungi and undesired weed.

The spray plants are advantageous only for those cultures that want water on the leaves with a very high relative humidity and if, in particular, they are located on plain-type terrain.

With respect to plant examples 24 and 25 referring respectively to grass cultures and to tree or bush cultures, what has been said with reference to plant 23 for pot-cultures does hold, paying attention to the fact that in plant 24 the delivery device 28 of the present invention, connected to the respective branch 22 through a micro-pipe 27 as above described, is placed or buried in correspondence with each of the grass-like cultures 29, 30, while in plant 25 several delivery devices 28, connected to respective branches 22 by means or respective micro-pipes 27, are located in register with or buried in an aligned relationship along arrays of tree- or bush-like cultures 31.

The particular usefulness of the bleeding delivery device of the present invention in the field of hobby activities is to be emphasized.

Indeed, for the irrigation of pots or flower-pots on balconies, it is sufficient to connect to a suitable number of branches of a pipe coming from a water-containing reservoir, provided with a faucet placed at a suitable height, a corresponding number of micro-pipes inserted in correspondence with the free end in respective delivery devices according to the invention to be buried in said pots or flower-pots.

With the above described plant an effective watering is obtained for domestic plants without the need of electric power and without a connection to the water supply network, but with the simple utilization of said reservoir for the feeding of water. This would not be possible with conventional irrigation devices of the "drop" kind because these would deliver too great a quantity of water, up to flooding the plants.

The present invention is not limited to the disclosed embodiments, but encompasses changes and/or modifications within the scope of the claims.

## Claims

1. A bleeding delivery device for a localized irrigation to culture spots comprising two superposed elements (1, 2 ; 8, 10), at least one of which is permeable, and a nipple (5, 6 ; 11) on one of said two elements, said bleeding delivery device being characterized in that said permeable element is a lamina or thin plate, said two elements (1, 2 ; 8, 10) are peripherally sealed and coupled together and said nipple (5, 6 ; 11) has a bore (15) for the insertion of a micro-pipe coaxial with a similar bore obtained on the application element.

2. A device according to claim 1, wherein both said elements have a flattened shape in the non-operative condition.

3. A device according to claims 1 and 2, wherein both said elements are laminae made of permeable material.

4. A device according to claims 1 and 2, wherein one of said elements is constituted of permeable material and the other of said elements is constituted of impermeable material.

5. A device according to claim 1, wherein the upper one of said elements has the shape of a cupola of rigid and impermeable material and the lower one of said elements has a flattened shape and is made of permeable material.

6. A device according to any of the preceding claims, wherein said permeable material is a porous fibrous material, either of the woven kind or of the non woven kind.

7. A device according to any of the preceding claims, wherein said impermeable material is a plastic laminate.

8. A device according to any of the preceding claims, wherein said two superposed elements are peripherally sealed together by bonding.

9. A device according to any of the preceding claims, wherein said nipple is applied to the upper of said two superposed elements.

10. A device according to any of the preceding claims, wherein said nipple is constitued by a frusto-conical member of a rigid material, provided with an axial bore and an enlarged base for the fastening by bonding onto the application element.

11. A device according to any of the claims 1 to 9, wherein said nipple is constitued by a plate of plastic rigid material with an axial bore.

12. A device according to any of the claims 1 to 9, wherein said nipple is constituted by a rigid material tubular body, the free end of which has the shape of a cone having a base diameter greater than that of said tubular member so as to create a step between them, said nipple having an axial bore having the shape of an inverted truncated cone and an inclined plane cutting a part of the peripheral surface of said free end having a conical shape in order to create a general shape like the point of an arrow.

13. A device according to any of the claims 1 to 9, wherein said nipple is constituted by a frusto-conical tubular body made of a rigid material.

**Ansprüche**

1. Auslaßvorrichtung für eine örtliche Bewässerung von Kulturstellen, mit zwei übereinander angeordneten Elementen (1, 2 ; 8, 10), von denen zumindest eines durchlässig ist, und mit einem Nippel (5, 6 ; 11) an einem der zwei Elemente, welche Auslaßvorrichtung dadurch gekennzeichnet ist, daß das durchlässige Element eine dünne Schicht oder dünne Platte ist, die zwei Elemente (1, 2 ; 8, 10) am Umfang abgedichtet und miteinander verbunden sind, und der Nippel (5, 6 ; 11) eine Bohrung (15) zum Einfügen eines Mikro-Rohres koaxial zu einer ähnlichen Bohrung aufweist, die am Anbringungselement erhalten ist.

2. Vorrichtung nach Anspruch 1, bei der beide Elemente in der Ruhestellung eine flache Form haben.

3. Vorrichtung nach Anspruch 1 oder 2, bei der beide Elemente dünne Schichten aus durchlässigem Material sind.

4. Vorrichtung nach Anspruch 1 oder 2, bei der eines der Elemente aus einem durchlässigen Material und das andere Element aus einem undurchlässigen Material gebildet ist.

5. Vorrichtung nach Anspruch 1, bei der das obere Element die Form einer Kuppel aus starrem und undurchlässigem Material und das untere Element eine flache Form hat und aus durchlässigem Material besteht.

6. Vorrichtung nach einem der vorhergehenden Ansprüche, bei der das durchlässige Material ein poröses Fasermaterial, von der Art eines Gewebes oder eines Non-woven-Materials, ist.

7. Vorrichtung nach einem der vorhergehenden Ansprüche, bei der das undurchlässige Material ein Kunststofflaminat ist.

8. Vorrichtung nach einem der vorhergehenden Ansprüche, bei der die zwei übereinander angeordneten Elemente durch Bonden am Umfang dicht miteinander verbunden sind.

9. Vorrichtung nach einem der vorhergehenden Ansprüche, bei der der Nippel am oberen der zwei übereinander angeordneten Elemente angeordnet ist.

10. Vorrichtung nach einem der vorhergehenden Ansprüche, bei der der Nippel durch ein kegelstumpfförmiges Glied aus einem starren Material gebildet ist, das mit einer Axialbohrung und einer vergrößerten Basis zur Befestigung durch Bonden am Anbringungselement versehen ist.

11. Vorrichtung nach einem der Ansprüche 1 bis 9, bei der der Nippel durch eine Platte aus starrem Kunststoffmaterial mit einer Axialbohrung gebildet ist.

12. Vorrichtung nach einem der Ansprüche 1 bis 9, bei der der Nippel durch einen rohrförmigen Körper aus starrem Material gebildet ist, dessen freies Ende die Form eines Konus mit einem Basisdurchmesser hat, der größer als jener des rohrförmigen Gliedes ist, um so dazwischen eine Stufe zu schaffen, wobei der Nippel eine Axialbohrung mit der Gestalt eines umgekehrten Kegelstumpfes hat und eine geneigte Ebene einen Teil der Umfangsfläche des freien Endes schneidet, das eine konische Form hat, um eine allgemeine Form ähnlich einer Pfeilspitze zu schaffen.

13. Vorrichtung nach einem der Ansprüche 1 bis 9, bei der der Nippel durch einen kegelstumpfförmigen Rohrkörper aus starrem Material gebildet ist.

**Revendications**

1. Dispositif de purge pour une irrigation localisée de cultures comprenant deux éléments superposés (1, 2 ; 8, 10), au moins un des deux éléments étant perméable, et un raccord (5, 6 ; 11) sur l'un des deux éléments susdits, le dispositif de purge susdit caractérisé en ce que l'élément perméable susdit est une lame ou une feuille mince, les deux éléments susdits (1, 2 ; 8,10) étant scellés à la périphérie et accouplés et le raccord susdit (5, 6 ; 11) ayant un alésage (15) pour l'insertion d'un câble coaxial microtuyau avec un alésage semblable obtenu sur l'élément d'application.

2. Dispositif suivant la revendication 1, caractérisé en ce que les deux éléments susdits ont une forme aplatie au repos.

3. Dispositif suivant les revendications 1 et 2, caractérisé en ce que les deux éléments susdits sont des lames en matière perméable.

4. Dispositif suivant les revendications 1 et 2, caractérisé en ce que l'un des éléments susdits est composé de matière perméable et l'autre des éléments susdits est composé de matière imperméable.

5. Dispositif suivant la revendication 1, caractérisé en ce que l'élément supérieur des éléments susdits a la forme d'une coupole en matière rigide et imperméable et l'élément inférieur des éléments susdits a une forme aplatie et étant composé de matière perméable.

6. Dispositif suivant l'une des revendications précédentes, caractérisé en ce que la matière perméable susdite est une matière poreuse fibreuse, soit de nature tissée, soit de nature-tissée.

7. Dispositif suivant l'une des revendications précédentes, caractérisé en ce que la matière imperméable susdite est une matière plastique stratifiée.

8. Dispositif suivant l'une des revendications précédentes, caractérisé en ce que les deux éléments superposés susdits sont scellés à la périphérie par collage.

9. Dispositif suivant l'une des revendications précédentes, caractérisé en ce que le raccord susdits est appliqué sur l'élément supérieur des deux éléments superposés susdits.

10. Dispositif suivant l'une des revendications précédentes, caractérisé en ce que le raccord susdit est composé d'un élément en forme d'un tronc de cône, en matière rigide, muni d'un alésage axial et d'une base élargie pour la fixation par collage sur l'élément d'application.

11. Dispositif suivant l'une des revendications 1 à 9, caractérisé en ce que le raccord susdit est composé d'une lame en matière plastique rigide avec un alésage axial.

12. Dispositif suivant l'une des rendications 1 à 9, caractérisé en ce que le raccord susdit est composé d'un élément tubulaire en matière rigide dont l'extrémité libre a la forme d'un cône avec un diamètre de base plus grand que celui de l'élément tubulaire susdit afin de créer un gradin entre les deux, le raccord susdit ayant un alésage axial de la forme d'un cône tronqué inversé et un plan incliné coupant une partie de la surface périphérique de l'extrémité libre susdite ayant une forme conique afin de créer une forme générale ressemblant à la pointe d'une flèche.

13. Dispositif suivant l'une des revendications 1 à 9, caractérisé en ce que le raccord susdit est composé d'un élément tubulaire en forme d'un tronc de cône, en matière rigide.

# FIG.1

# FIG.2

# FIG.3

# FIG. 4

a)

b)

# FIG.5